# FASCICULE DE BREVET EUROPEEN

(11) **EP 0 848 469 B1**
(45) Date de publication et mention de la délivrance du brevet: **07.05.2003**
(21) Numéro de dépôt: 96440110.3
(22) Date de dépôt: 10.12.1996
(51) Int. Cl.: H02B 1/56

(54) **Dispositif de dissipateur thermique pour armoire de distribution électrique ou analogue, contenue dans un ouvrage souterrain**
Wärmesenkevorrichtung für einem elektrischen Verteilerschrank oder dergleichen zur unterirdischen Montage
Heat sink device for an electric distribution cabinet or similar, contained in an underground cavity

(43) Date de publication de la demande: 17.06.1998
(73) Titulaire: BARAT S.A., 41110 Saint Aignan sur Cher (FR)
(72) Inventeur: Provost, Christian, 41700 Contres (FR)
(74) Mandataire: Armengaud Ainé, Alain

(56) Documents cités:
- WO-A-91/06995
- CH-A- 658 158
- FR-A- 2 680 609
- PATENT ABSTRACTS OF JAPAN vol. 6, no. 189 (E-133) & JP 57 103337 A (HITACHI LTD)
- PATENT ABSTRACTS OF JAPAN vol. 97, no. 3, 31 Mars 1997 & JP 08 288435 A (TERADA ATSUSHI)

## Description

La présente invention a pour objet un dispositif de dissipateur thermique pour armoire de distribution électrique ou analogue, contenue dans un ouvrage souterrain du génie civil.

Les armoires de distribution électrique ou analogue sont traditionnellement placées sur la voie publique, ce qui présente des inconvénients d'esthétique, d'encombrement et de sécurité.

Pour pallier ces inconvénients, les armoires ont été enterrées dans des ouvrages souterrains. Ainsi, FR 2 680 609 divulgue une armoire de distribution électrique ou analogue, contenue dans un ouvrage souterrain, extractible dudit ouvrage par l'intermédiaire d'un châssis. Cette technique génère toutefois d'autres inconvénients.

En effet, les ouvrages doivent nécessairement être étanches, or les appareils contenus dans les armoires dégagent beaucoup de chaleur qu'il est nécessaire d'évacuer pour ne pas endommager lesdits appareils, la température ne devant normalement pas dépasser 50°.

Pour pallier ces inconvénients, certains ont proposé d'équiper les ouvrages souterrains d'un dispositif de ventilation, ce qui, outre le coût important, nécessite des échanges avec l'extérieur, préjudiciables à l'étanchéité de l'ouvrage.

La présente invention a pour but de remédier à ces divers inconvénients en proposant un dispositif de dissipateur thermique de conception simple donc peu coûteuse, et qui n'a aucune incidence sur l'étanchéité de l'ouvrage.

Le dispositif objet de la présente invention se caractérise essentiellement en ce qu'il comprend, dans un ouvrage souterrain, une armoire de distribution électrique ou analogue, extractible dudit ouvrage par l'intermédiaire d'un châssis comprenant des bielles formant un parallélogramme déformable qui permet d'extraire l'armoire de l'ouvrage en conservant la verticalité de ladite armoire, et en ce que la face arrière de ladite armoire comporte un élément, réalisé dans un matériau de grande conductibilité thermique, muni d'ailettes venant s'imbriquées dans les ailettes d'un corps, réalisé également dans un matériau de grande conductibilité thermique, solidaire de ladite paroi, lequel corps comporte des prolongements enfouis profondément dans cette dernière.

Lorsque l'armoire est dans l'ouvrage, les calories générées par les appareils contenus dans l'armoire sont absorbées par la paroi dudit ouvrage par l'intermédiaire des ailettes.

Selon une caractéristique additionnelle du dispositif selon l'invention l'armoire est réalisée dans le même matériau que l'élément qui lui est solidarisé.

Selon une autre caractéristique additionnelle du dispositif selon l'invention, l'élément solidaire de l'armoire se prolonge à l'intérieur de celle-ci.

Selon un mode de réalisation particulier du dispositif selon l'invention, le prolongement de l'élément à l'intérieur de l'armoire consiste en des ailettes.

Les avantages et les caractéristiques de la présente invention ressortiront plus clairement de la description qui suit et qui se rapporte au dessin annexé, lequel en représente un mode de réalisation non limitatif.

Dans le dessin annexé :

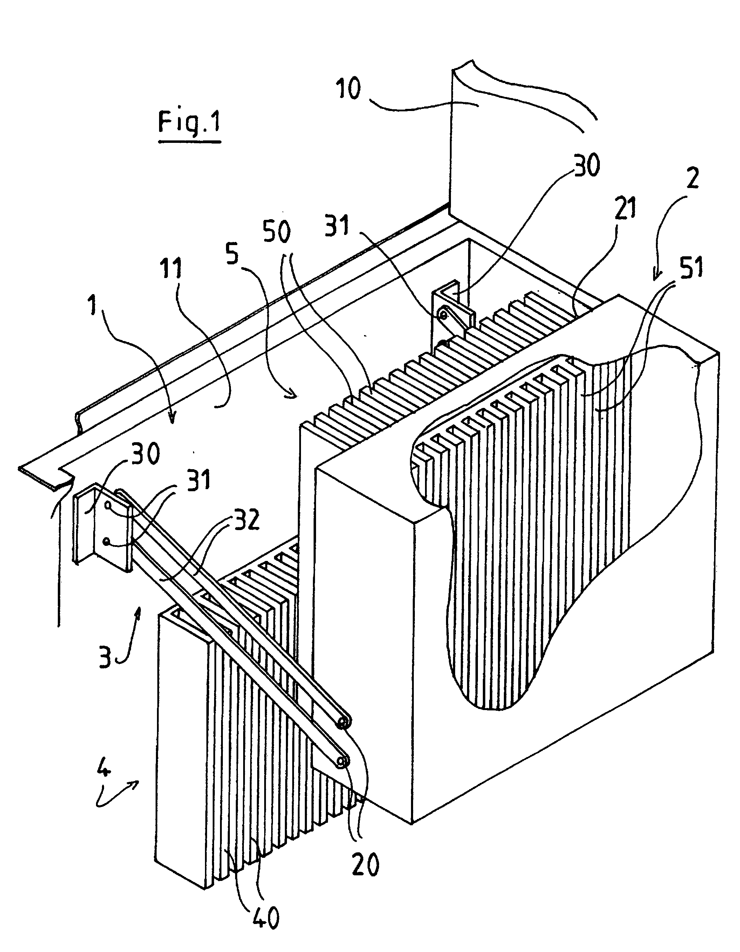

- la figure 1 représente une vue schématique partielle en perspective avec arraché partiel d'un ouvrage souterrain équipé d'un dispositif de dissipateur thermique selon l'invention.
- la figure 2 représente une vue en coupe selon un plan vertical du même ouvrage.

Si on se réfère à ces figures on peut voir un ouvrage maçonné du génie civil 1, équipé d'une trappe 10, dans lequel est disposée une armoire 2, s'articulant sur une paroi 11 de l'ouvrage 1 par l'intermédiaire d'un châssis 3.

Le châssis 3 comprend deux supports 30, solidaires de la paroi 11, sur chacun desquels s'articulent, par une de leurs extrémités autour d'axes 31 superposés, deux bielles 32 parallèles s'articulant par leurs autres extrémités sur l'armoire 2 sur des axes 20 superposés.

Les bielles 32 formant un parallélogramme déformable, le châssis 3 permet d'extraire l'armoire 2 de l'ouvrage 1 en conservant la verticalité de l'armoire 2.

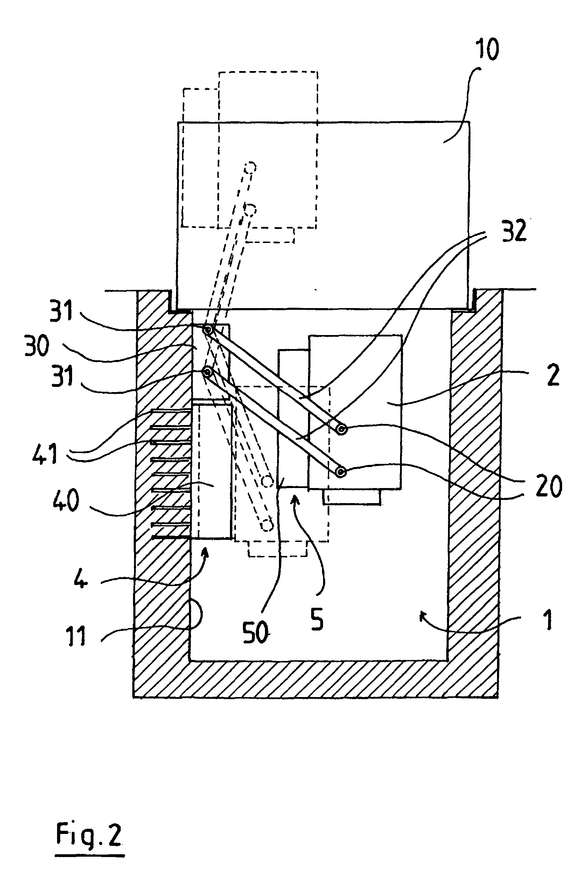

On notera que sur les figures l'armoire 2 est dans une position intermédiaire, les positions extrêmes étant représentées en traits discontinus sur la figure 2.

On notera également que le châssis peut comporter des vérins, non représentés, permettant d'assister la sortie et la rentrée de l'armoire 2.

On peut voir également que sur la paroi 11 est solidarisé un corps 4 muni d'ailettes verticales 40, et qu'à la face arrière 21 de l'armoire 2 est solidarisé un élément 5 muni d'ailettes verticales 50.

La forme et les dimensions des ailettes 40 et 50 sont telles que lorsque l'armoire 2 est en position rentrée, les ailettes 50 de l'élément 5 s'imbriquent dans les ailettes 40 du corps 4.

Sur la figure 2 on peut voir que le corps 4 comportent des prolongements 41, enfouis profondément dans la paroi 11 voire au-delà, ces prolongements peuvent consister en de nombreuses barres régulièrement réparties.

D'autre part, l'élément 5 se prolonge à l'intérieur de l'armoire 2, ce prolongement est réalisé sous la forme d'ailettes 51.

La chaleur dégagée par les appareils, non représentés, contenus dans l'armoire 2 est transmise à l'élément 5 par l'intermédiaire des ailettes 51, puis au corps 4 par l'intermédiaire des ailettes 50 et 40, et absorbée par la paroi 11 par l'intermédiaire des prolongements 41.

L'élément 5 et le corps 4 sont réalisés dans un matériau de grande conductibilité thermique tel l'aluminium.

On notera que l'armoire 2 peut également être réalisée dans le même matériau que le corps 4, en sorte que ce dernier ne comporte alors pas nécessairement d'ailettes 51, la conduction de la chaleur se faisant par les parois de l'armoire 2.

## Revendications

1. Dispositif de dissipateur thermique pour armoire de distribution électrique ou analogue, contenue dans un ouvrage souterrain, ledit dispositif comprenant, dans ledit ouvrage souterrain (1), une armoire (2) de distribution électrique ou analogue, extractible dudit ouvrage par l'intermédiaire d'un châssis (3), **caractérisé en ce que** ledit châssis comprend des bielles (32) formant un parallélogramme déformable qui permet d'extraire l'armoire (2) de l'ouvrage (1) en conservant la verticalité de ladite armoire, et **en ce que** la face arrière (21) de ladite armoire comporte un élément (5), réalisé dans un matériau de grande conductibilité thermique, muni d'ailettes (50) venant s'embriquées dans les ailettes (40) d'un corps (4), réalisé également dans un matériau de grande conductibilité thermique, solidaire de ladite paroi (11), lequel corps comporte des prolongements (41) enfouis profondément dans cette dernière.

2. Dispositif selon la revendication 1, **caractérisé en ce que** le châssis (3) comporte deux supports (30) solidaires de la paroi (11) et sur chacun desquels s'articulent, par une de leurs extrémités autour d'axes (31) superposés, les deux bielles (32) parallèles s'articulant par leurs autres extrémités sur l'armoire (2) sur des axes (20) superposés.

3. Dispositif selon la revendication 2, **caractérisé en ce que** le châssis (3) comporte des vérins d'assistance à la sortie et à la rentrée de l'armoire (2).

4. Dispositif selon l'une quelconque des revendications précédentes, **caractérisé en ce que** l'élément (5) solidaire de l'armoire (2) se prolonge à l'intérieur de celle-ci.

5. Dispositif selon la revendication 4, **caractérisé en ce que** le prolongement de l'élément (5) à l'intérieur de l'armoire (2) consiste en des ailettes (51).

6. Dispositif selon l'une quelconque des revendications précédentes, **caractérisé en ce que** l'armoire (2) est réalisée dans le même matériau que l'élément (5).

7. Dispositif selon l'une quelconque des revendications précédentes, **caractérisé en ce que** l'élément (4) et le corps (5) sont réalisés en aluminium.

## Claims

1. Heat sink device for an electrical distribution cabinet or similar, contained in an underground cavity, the said device comprising, in the said underground cavity (1), an electrical distribution cabinet (2) or similar, extractible from the said cavity by means of a chassis (3) **characterized in that** the said chassis comprises rods (32) forming a deformable parallelogram which makes it possible to extract the cabinet (2) from the cavity (1) whilst maintaining the verticality of the said cabinet, and **in that** the rear face (21) of the said cabinet comprises an element (5), made from a material of high thermal conductivity, provided with fins (50) which become interleaved with the fins (40) of a body (4), also made from a material of high thermal conductivity, integral with the said wall (11), this body comprising protrusions (41) deeply buried in the latter.

2. Device according to claim 1, **characterized in that** the chassis (3) comprises two supports (30), integral with the wall (11), on each of which are articulated, by one of their ends about spindles (31) positioned one above the other, the two parallel rods (32) articulated by their other ends on the cabinet (2) about spindles (20) positioned one above the other.

3. Device according to claim 2, **characterized in that** the chassis (3) comprises jacks to assist the exit and the re-entry of the cabinet (2).

4. Device according to any one of the preceding claims, **characterized in that** the element (5) integral with the cabinet (2) extends inside the latter.

5. Device according to claim 4, **characterized in that** the part of the element (5) extending inside the cabinet (2), consists of fins (51).

6. Device according to any one of the preceding claims, **characterized in that** the cabinet (2) is made from the same material as the element (5).

7. Device according to any one of the preceding claims, **characterized in that** the element (4) and the body (5) are made of aluminium.

## Patentansprüche

1. Wärmeabführungsvorrichtung für einen elektrischen Verteilerschrank oder dergleichen, der in einem unterirdischen Bauwerk enthalten ist, wobei die Vorrichtung im unterirdischem Bauwerk (1) einen elektrischen Verteilerschrank (2) oder dergleichen enthält, der aus dem Bauwerk mittels eines Chassis (3) herausnehmbar ist, **dadurch gekennzeichnet, daß** das Chassis Stangen (32) aufweist, welche ein verformbares Parallelogramm bilden, welches das Herausheben des Verteilerschranks (2) aus dem Bauwerk (1) unter Erhaltung der senkrechten Stellung des Verteilerschranks ermöglicht, und daß die Rückseite (21) des Verteilerschranks ein Element (5) aufweist, das aus einem Material mit hoher Wärmeleitfähigkeit hergestellt und mit Rippen (50) versehen ist, welche in die Rippen (40) eines ebenfalls aus einem Material mit hoher Wärmeleitfähigkeit hergestellten Körpers (4) eingreifen, der mit der Wand (11) fest verbunden ist, wobei der Körper tief in letztere eindringende Fortsätze (41) aufweist.

2. Vorrichtung nach Anspruch 1, **dadurch gekennzeichnet, daß** das Chassis (3) zwei mit der Wand (11) fest verbundene Träger (30) aufweist und an jedem derselben mit einem ihrer Enden die zwei parallelen Stangen (32) an übereinander angeordneten Achsen (31) angelenkt sind, die mit ihren anderen Enden am Verteilerschrank 2 an übereinander angeordneten Achsen (20) angelenkt sind.

3. Vorrichtung nach Anspruch 2, **dadurch gekennzeichnet, daß** das Chassis (3) Arbeitszylinder zur Unterstützung beim Herausheben und Zurücksenken des Verteilerschranks (2) aufweist.

4. Vorrichtung nach einem der vorangehenden Ansprüche, **dadurch gekennzeichnet, daß** das mit dem Verteilerschrank (2) fest verbundene Element (5) sich im Inneren desselben fortsetzt.

5. Vorrichtung nach Anspruch 4, **dadurch gekennzeichnet, daß** der Fortsatz des Elements (5) im Inneren des Verteilerschranks (2) aus Rippen (51) besteht.

6. Vorrichtung nach einem der vorangehenden Ansprüche, **dadurch gekennzeichnet, dass** der Verteilerschrank (2) aus dem gleichen Material wie das Element (5) hergestellt ist.

7. Vorrichtung nach einem der vorangehenden Ansprüche, **dadurch gekennzeichnet, daß** das Element (4) und der Körper (5) aus Aluminium hergestellt sind.
